# EUROPEAN PATENT APPLICATION

(11) **EP 4 657 774 A1**
(43) Date of publication of application: **03.12.2025**
(21) Application number: 25180116.3
(22) Date of filing: 02.06.2025
(51) Int. Cl.: H04B 17/12, H04B 17/21

(54) **COMPUTER SYSTEM AND METHOD FOR ON-BOARD CALIBRATION OF A DIRECT RADIATING ARRAY ANTENNA**

(30) Priority: 31.05.2024 US 202463654555 P
(71) Applicant: MacDonald, Dettwiler and Associates Corporation, Ste-Anne-de-Bellevue, QC H9X 3R2 (CA)
(72) Inventor: Bellemare, Michel, Sainte-Anne-de-Bellevue, Québec, H9X 3R2 (CA); Leclère, Jérôme, Sainte-Anne-de-Bellevue, Québec, H9X 3R2 (CA); Jazebizadeh, Hooman, Sainte-Anne-de-Bellevue, Québec, H9X 3R2 (CA); Hill, Jonathan, Sainte-Anne-de-Bellevue, Québec, H9X 3R2 (CA); Bouchard, David R. G., Sainte-Anne-de-Bellevue, Québec, H9X 3R2 (CA); Riel, Mathieu, Sainte-Anne-de-Bellevue, Québec, H9X 3R2 (CA)
(74) Representative: Grünecker Patent- und Rechtsanwälte PartG mbB

(57) **Abstract**

A system for calibrating an antenna is provided. The system includes a processing unit configured to operate the antenna in a transmit calibration mode or a receive calibration mode. In a transmit calibration mode, the processing unit is configured to cause: a test waveform generator to generate a first test waveform signal and provide the first test waveform signal to an antenna and a comparison module; to obtain the first test waveform signal from the test waveform generator and transmit the first test waveform signal; a probe, about the antenna, to receive a first received waveform signal and provide the first received waveform signal to the comparison module; the comparison module to obtain the first received waveform signal from the probe and compare the first test waveform signal to the first received waveform signal to determine at least one calibration factor to be applied to the antenna.

## Description

### Technical Field

The following relates generally to antenna systems, and more particularly to systems and methods for calibrating a direct radiating array antenna.

### Introduction

In terrestrial systems, equipment may be calibrated quickly by personnel who can access the equipment at its site. In contrast, equipment in a satellite system is expected to be difficult to calibrate, as the problematic piece of equipment would have to be captured to access it. Alternatively, the equipment could be left in orbit, functioning incorrectly, until it is de-orbited and a replacement can be launched.

In a transmit or receive direct radiating array (DRA) antenna, it is required to maintain control over the excitations or weighting factors (amplitude and phase) of the active antenna elements. At high frequencies, such as in the Ka-band, the anticipated errors in the network over temperature cycles, time, and radiation will create deviations that will impact the performance of the DRA antenna. Therefore, periodic on-board calibration of a DRA antenna is needed to maintain reliable operations.

Antennas may need factory calibration, which is performed prior to launch/use, and in-orbit calibration, which is performed when the antenna is in operation on the orbiting satellite (i.e., during its operative lifetime).

Existing factory approaches to factory calibration of a DRA antenna are generally a part of the manufacturing process and usually performed under controlled laboratory conditions. This means that factory calibration is generally not able to be performed in-orbit once a DRA antenna system has been deployed.

Another on-board technique for calibrating a DRA antenna, which may be performed while the DRA antenna system is in orbit, is the mutual coupling method. However, the mutual coupling method for calibration is not as reliable and increases the complexity of the system.

Accordingly, there is a need for an improved system and method for calibrating equipment in DRA antenna systems that overcomes at least some of the disadvantages of existing systems and methods.

### Summary

A system for calibrating an antenna having a plurality of antenna elements is provided. The system includes at least one processing unit. The processing unit is configured to operate the antenna in a transmit calibration mode or a receive calibration mode. In a transmit calibration mode, the processing unit is configured to cause a test waveform generator to generate a first test waveform signal and provide the first test waveform signal to an antenna and a comparison module. In a transmit calibration mode, the processing unit is further configured to cause the antenna, to obtain the first test waveform signal from the test waveform generator and transmit the first test waveform signal. In a transmit calibration mode, the processing unit is further configured to cause a probe, about the antenna, to receive a first received waveform signal and provide the first received waveform signal to the comparison module. In a transmit calibration mode, the processing unit is further configured to cause the comparison module to obtain the first received waveform signal from the probe and compare the first test waveform signal to the first received waveform signal to determine at least one calibration factor to be applied to the antenna. In a receive calibration mode, the processing unit is configured to cause the test waveform generator to generate a second test waveform signal and provide the second test waveform signal to the probe and the comparison module. In a receive calibration mode, the processing unit is further configured to cause the probe to transmit the second test waveform signal. In a receive calibration mode, the processing unit is further configured to cause the antenna to receive a second received waveform signal and provide the second received waveform signal to the comparison module. In a receive calibration mode, the processing unit is further configured to cause the comparison module to compare the second received waveform signal to second test waveform signal to determine at least one calibration factor to be applied to the antenna.

In an embodiment, the antenna is a direct radiating array (DRA).

In an embodiment, transmitting the first test waveform signal comprises at least one of transmitting by a single antenna element of the plurality of antenna elements at the antenna, and transmitting by a set of the plurality of antenna elements at the antenna.

In an embodiment, the receiving the second received waveform signal comprises at least one of receiving by a single antenna element of the plurality of antenna elements at the antenna, receiving by a set of the plurality of antenna elements at the antenna.

In an embodiment, the probe includes at least one of: a calibration antenna; a quasi-far-field (QFF) probe; and a near field (NF) probe.

In an embodiment, the system further includes a remediation module communicatively connected to the comparison module and the antenna, the remediation module configured to receive calibration data from the comparison module, generate remediation data based on the calibration data, and provide the remediation data to the antenna.

In an embodiment, the remediation data includes at least one of: control signals for controlling or adjusting operation of at least one element of the antenna; instructions for the antenna to bypass a particular element of the antenna; instructions for the antenna to disable a particular element of the antenna; and instructions for the antenna to reconfigure a particular element of the antenna,

In an embodiment, comparing includes at least one of comparing an amplitude of the first test waveform signal to an amplitude of the first received test waveform signal, comparing a phase of the first test waveform signal to a phase of the first received test waveform signal, comparing an amplitude of the second received waveform signal to an amplitude of the reference waveform signal, and comparing a phase of the second received waveform signal to a phase of the reference waveform signal.

In an embodiment, the system further includes one or more radio frequency (RF) amplifiers communicatively coupled to the antenna.

In an embodiment, the at least one calibration factor is defined by at least one of a set of mission parameters, a reduction in side-lobe levels, or a power attribute.

In an embodiment, the at least one processing unit is further configured to cause a reporting module, at the antenna, to report the at least one calibration factor as information in a user interface to allow a user to visualize the system.

In an embodiment, the processing unit is located at an on-board processing unit of a satellite on which the DRA is or will be disposed.

In an embodiment, the processing unit is located at a processor of the DRA.

In an embodiment, the processing unit is located at a ground station.

A method, at a processing unit, of factory calibration of a node in a communication network is provided. The method includes generating, by a test waveform generator, a test waveform signal, and providing the test waveform signal to an antenna and a comparison module. The method further includes transmitting, by an element of the antenna, the test waveform signal. The method further includes receiving, by a probe, a received waveform signal, and providing the received waveform signal to the comparison module. The method further includes comparing, by the comparison module, the test waveform signal and the received waveform signal to compute calibration reference factors for the element.

In an embodiment, the method includes further performing signal correlation on the received waveform signal.

In an embodiment, the method further includes storing correlation results in memory.

A method, at a processing unit, of in-orbit calibration of a node in a communication network is provided. The method includes generating, by a test waveform generator, a test waveform signal, and providing the test waveform signal to an antenna. The method further includes transmitting, by an element of the antenna, the test waveform signal. The method further includes receiving, by each probe of a plurality of probes, a received waveform signal, and providing each received waveform signals to a comparison module. The method further includes comparing, by the comparison module, the test waveform signal and each received waveform signal to compute calibration correction factors for the element.

In an embodiment, the method includes further performing signal correlation on the received waveform signal.

In an embodiment, the method further includes storing correlation results in memory.

In an embodiment, the processing unit is located at one of the DRA, an on-board processor, and a ground station.

A method, at a processing unit, for in-orbit transmit calibration of a node in a communication network is provided. The method includes generating, by a test waveform generator, a test waveform signal. The method further includes providing, by the test waveform generator, the test waveform signal to an antenna and a comparison module. The method further includes transmitting, by an element of the antenna, the test waveform signal. The method further includes receiving, by a plurality of probes, a received waveform signal. The method further includes providing, by the probes, the received waveform signal to the comparison module. The method further includes comparing, by the comparison module, the test waveform signal to the received waveform signal to compute calibration correction factors for the element.

In an embodiment, the method includes further performing signal correlation on the received waveform signal.

In an embodiment, the method further includes storing correlation results in memory.

In an embodiment, the processing unit is located at one of the DRA, an on-board processor, and a ground station.

A method, at a processing unit, for in-orbit receive calibration of a communication network is provided. The method further includes generating, by a test waveform generator, a test waveform signal. The method further includes providing, by the test waveform generator, the test waveform signal to a comparison module and a plurality of calibrated probes simultaneously. The method further includes transmitting, by the probes, the test waveform signal. The method further includes receiving, by an element of an antenna, a received waveform signal. The method further includes providing, by the antenna, the received waveform signal to the comparison module. The method further includes comparing, by the comparison module, the received waveform signal to the test waveform signal to compute calibration correction factors for the element.

In an embodiment, the method includes further performing signal correlation on the received waveform signal.

In an embodiment, the method further includes storing correlation results in memory.

In an embodiment, the processing unit is located at one of the DRA, an on-board processor, and a ground station.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of an example system for calibrating a direct radiating array (DRA) antenna, according to an embodiment;
Figure 2 is a flowchart of an example method of factory calibration of a node in a communication network, according to an embodiment;
Figure 3A is a flowchart of an example method for transmit in-orbit calibration of a node in a communication network, according to an embodiment;
Figure 3B is a flowchart of an example method for receive in-orbit calibration of a node in a communication network, according to an embodiment;
Figure 4 is a block diagram of an example calibration system of a transmit DRA antenna, according to an embodiment;
Figure 5 is a block diagram of an example calibration system of a receive DRA antenna, according to an embodiment;
Figure 6 is a block diagram of an example electronic device, according to an embodiment;
Figure 7 is an example arrangement of the system depicted in Figure 4, according to an embodiment;
Figure 8 is an example arrangement of the system depicted in Figure 5, according to an embodiment; and
Figure 9 is a flow diagram of a method of on-board calibration of a DRA antenna, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to antenna systems, and more particularly to on-board calibration of a direct radiating array (DRA) antenna.

The calibration methods of the present disclosure are implemented using at least one processing unit. In variations, the processing unit may be implemented as part of the antenna system being calibrated (e.g., as part of a DRA), as part of an on-board processor (i.e., onboard a satellite), or at a ground station. Accordingly, while reference is made throughout the present disclosure to "on-board calibration", it is to be understood that aspects of the processing performed as part of the calibration may be performed on-board the satellite or on ground (such as at a ground station).

Systems and methods for on-board calibration of a DRA antenna are provided. The system may be used to perform a factory calibration or an in-orbit calibration of the DRA antenna. The factory or in-orbit calibration can be carried out remotely. The calibration includes generating a test wave signal, transmitting and receiving the signal the test signal, and comparing the original generated signal and the received signal according to a calibration algorithm encoded as computer-executable instructions and executed by a processing unit (e.g., an on-board processor) in order to calibrate or correct excitations or weighting factors (amplitude and phase) of the active antenna elements of the DRA. Techniques disclosed herein may be applied to a receive DRA antenna or a transmit DRA antenna. The system uses one or more on-board probes positioned outside of the array of radiating elements for transmitting or receiving the test wave signal (depending on the type of antenna). In an embodiment, four probes disposed in a quadrature arrangement around the array are used. Each probe may include its own dedicated RF chain, which may improve signal quality.

Techniques disclosed herein may be used not only for calibrating DRA antennas but may also be used in calibrating MIMO type antennas, 5G antennas, or an aggregation of multiple single antennas on the ground or space, for example. Thus, techniques disclosed may be applied wherever there is a need to calibrate the amplitude and phase of different transmitters or receivers to be used in a coherent signal sum.

As used herein, "transmitting device" refers to an electronic device that produces radio waves using an antenna. As used herein, "receiving device" refers to an electronic device which receives radio waves to interpret the information carried in the waves to a usable form.

As used herein, a "processing unit" refers to a component or system that is designed to execute instructions and process data. The processing unit may be able to execute algorithms, manage data flow, perform computations, or control other components within a system. Further, the processing unit may include specific hardware (e.g., a CPU) and/or software components for performing data processing tasks. The processing unit may be integrated with other components of a system, such as memory, I/O interfaces, or network interfaces. A processing unit may be located, for example, at a DRA antenna, at an on-board processor, or even at a ground station. A processing unit may also include, for example, one or more field programmable gate arrays (FPGAs) or application specific integrated circuits (ASICs) to rapidly perform processing operations. Therefore, and as an example, where an on-board processor is depicted as processing data, it may be taken to mean that processing unit located at the onboard processor is used to process said data.

The systems and methods of the present disclosure may provide particular advantages. Elements of a DRA antenna may be calibrated individually or the DRA antenna as a whole may be calibrated. Malfunctioning radiating elements in the DRA antenna can be identified, so that they may be repaired or bypassed during transmitting and receiving. The techniques for a transmit DRA antenna and a receive DRA antenna do not differ greatly, nor do techniques for factory calibration and in-orbit calibration.

The on-board calibration system disclosed herein provides several benefits over remote calibration techniques despite a slight increase in size, weight, power, and cost (SWAP-C) per DRA antenna.

Firstly, the on-board calibration of the present disclosure allows for a low system infrastructure cost. On-board calibration provides continuous monitoring, greater precision, is channel independent, self-contained, simpler and more reliable. On-board calibration may reduce the overall cost and complexity of the system, as compared to other remote calibration systems which have been proposed.

The in-orbit on-board calibration approach of the present disclosure precludes the need for access to or use of any ground station. In this way, calibration may be conducted autonomously and on-board the platform hosting the DRA antenna system (i.e., satellite). Techniques disclosed herein further provide more flexibility around the timing at which the calibration can be performed. When relying on a ground station, the calibration can only be performed when the ground station is in sight. With on-board calibration, this constraint disappears. With an increase in the flexibility of calibration, there is an increase in the accuracy of the DRA antenna system as there are more opportunities to perform calibration (and thus may be accurately calibrated more frequently).

Further, the systems and methods of the present disclose may implement a single element calibration (SEC) method (i.e., element by element calibration), allowing for individual radiating elements of a DRA antenna to be calibrated. This advantage allows for the detection of failed elements of a DRA antenna. Calibration may further be performed without traffic and conducted in a time-efficient manner.

The calibration technique of the present disclosure may also be performed using a full DRA antenna frequency band with several reference frequencies, allowing for calibration across the varying reference frequencies.

In addition, methods disclosed herein may be used to measure the delay. There are two types of compensation in a digital beamformer: delay and phase. The present method obtains the phase changes in-orbit. Nevertheless, by assessing the phase gradient over frequency, it is possible to obtain the delay information, which is useful in factory calibrations that require that information.

In variations, the calibration method of the present disclosure may be used to calibrate transmit and receive DRA antennas and any products in low earth orbit (LEO), medium earth orbit (MEO), or geostationary orbit (GEO) satellite systems.

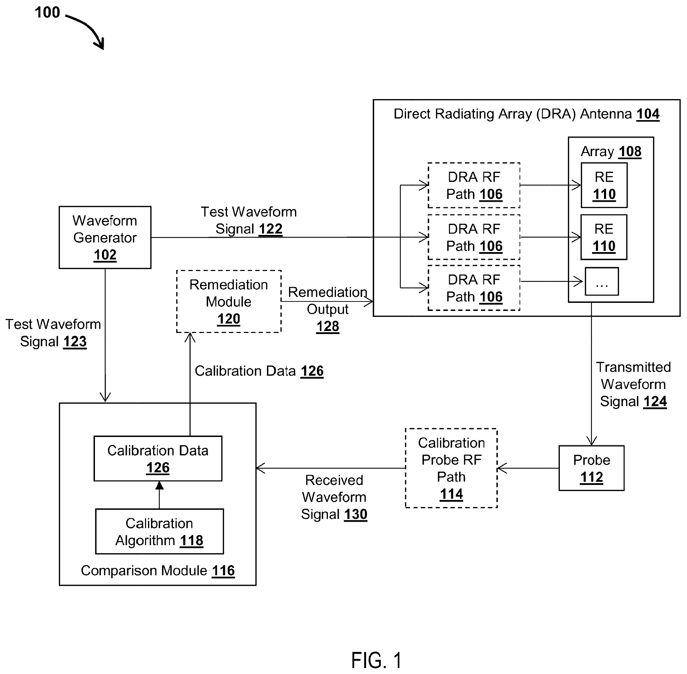

Referring now to Figure 1, shown therein is a system 100 for calibrating a direct radiating array (DRA) antenna, according to an embodiment.

The system 100 includes a waveform generator 102, a DRA antenna 104, a probe 112, a calibration probe RF path 114, and a comparison module 116. The DRA antenna 104 includes a plurality of DRA radio frequency (RF) paths 106 and a radiating array 108. The array 108 includes a plurality of radiating elements 110 (also referred to antenna elements). Each radiating element 110 has its own dedicated RF path 106. While only three DRA RF paths 106 are depicted, it will be understood by those of skill in the art that each radiating element 110 will have its own DRA RF path 106, and therefore the depiction of three DRA RF paths 106 is not to be taken as a limitation.

In the example system 100, the DRA antenna 104 is a transmit DRA antenna, however the system 100 could be modified to in which the DRA antenna 104 is a receive DRA antenna.

The system 100 may be implemented as part of a terrestrial or space-based antenna system. In a space-based antenna system, the system 100 may, for example, be located at or on a satellite. Performance of calibration on-board the satellite when on-orbit may be referred to an on-orbit calibration.

Waveform generator 102 is implemented at a processing unit. The processing unit may be an on-board processor. Comparison module 116 is implemented at a processing unit. The processing unit may be an on-board processor. An on-board processor may be implemented as a processor located at the DRA antenna 104, and a non-transient computer readable memory having stored instructions which when executed by the processor configure the system 100 to carry out operations disclosed herein.

In some embodiments, the system 100 further includes a remediation module 120. The remediation module 120 is implemented at a processing unit. The processing unit may be an on-board processor. In some embodiments, remediation module 120 may also be implemented at an on-board processor the same as or similar to the on-board processor at which the waveform generator 102 and the comparison module 116 are implemented.

The comparison module 116 is configured to execute a calibration algorithm 118 for calibrating the DRA antenna 104.

The calibration algorithm 118 may be encoded as computer-executable instructions which, when executed by a processor, cause the computer to perform the steps of the calibration algorithm 118.

In some embodiments, the calibration algorithm 118 is used to calculate the compensation of DRA antenna phase and amplitude.

The waveform generator 102 is configured to generate a single test waveform signal per radiating element and provide the test waveform signal 122 to the DRA antenna 104 and test waveform signal 123 the comparison module 116. The test waveform signal 123 provided to the comparison module 116 may be considered and referred to as an "untransmitted" test waveform signal.

While the test waveform signals are numerated differently for purposes of clarity in the illustration, it will be understood that test waveform signal 122 and test waveform signal 123 are the same test waveform signal.

The DRA antenna 104 receives the test waveform signal 122 from the waveform generator 102 and transmits the test waveform signal (referred to as transmitted waveform signal 124).

In some embodiments, the DRA antenna 104 may receive the test waveform signal 122 via one or more of the DRA RF paths 106, which may then provide the test waveform signal to the array 108. In some embodiments, the DRA antenna 104 may transmit the test waveform signal (as transmitted waveform signal 124) via the array 108 of radiating elements 110. In some embodiments, the transmission may be performed using the entire DRA antenna 104 (i.e., using all of the radiating elements 110). In other embodiments, transmission may be performed by selecting individual radiating elements 100. Transmission by individual elements 110 may provide a greater degree of granularity in the system 100.

The probe 112 receives the transmitted waveform signal 124 from the DRA 104 and provides the received waveform signal 130 to the comparison module 116 via the calibration probe RF path 114.

In some embodiments, a plurality of probes 112 is used.

In a particular embodiment, four probes 112 may be used. The four probes may be arranged in a quadrature configuration about the transmit DRA antenna 104. In other embodiments, other numbers or configurations of probes may be used.

It will be reasonably understood that the probe(s) 112 may be used in transmit or receive mode for a receive or transmit DRA antenna calibration, respectively.

The comparison module 116 obtains the received waveform signal 130 from the receiving device and compares the test waveform signal 123 ("untransmitted test waveform signal") to the received waveform signal 130 and outputs calibration information (also referred to as calibration data 126).

In particular, the comparison module 116 executes the calibration algorithm 118 to compare test waveform signal 123 to the received waveform signal 130, and to generate calibration data 126.

In some embodiments, the comparison module 116 may further provide the results of the comparison (e.g., calibration data 126) to the remediation module 120.

The remediation module 120 provides a remediation output (data) 128 to the DRA antenna 104 for calibration of the array 108 and the DRA RF paths 106.

For example, the remediation module 120 may receive calibration data 126 and generate remediation data 128 based on the calibration data 126.

The remediation data 128 may include, for example, control signals for controlling or adjusting operation of one or more of the elements 110 of the array 108.

In some embodiments, the remediation data may include calibration factors, such as, but not limited to, DRA calibration reference factors (CRF_{d}) and/or probe calibration reference factors (CRFₚ), performed in factory calibration, and calibration correction factors (CCFs). Such remediation data may be used to remediate or calibrate the DRA antenna 104.

Remediation of a DRA antenna may include, for example, turning off a particular element 110 in the DRA antenna, bypassing or ignoring an element 110, or mathematically adjusting calibration or remediation data to reflect a desired outcome.

For a transmit DRA antenna, the code and signal generation may be in the transmit analog or digital beamformer.

Similarly, for the receive DRA antenna, the code and signal acquisition may be in the receive analog or digital beamformer.

Further, the signal generation and capture for the receive and transmit DRA antenna utilizes the calibration sub-system hardware and a processing unit. The signal generation may be a pseudo-random-noise (PRN) code, continuous wave, or anything else that is tolerant to noise and interferences. Because of the large dynamic range of the captured signal of each element, a significant processing gain is required to extract the signal information with adequate signal to noise ratio. Usually, the signal generation and capture are performed in the beamformer via memory playback, capture or via correlators.

The calibration sub-system hardware includes four external low-profile probes that are installed symmetrically (e.g., in a quadrature arrangement) about the DRA antenna. Each probe has a dedicated reversed RF-chain, such that the frequency does not change during conversion, and that each probe connects to all digital beamforming network (DBFN) layers to calibrate them separately. In a LEO system, there may, for example, be two transmit layers and one receive layer. Similarly, in a MEO system, there may be four transmit layers and four receive layers.

Each probe may be connected to a separate digital beamformer chip, thereby increasing reliability and reducing the calibration time.

The DBFN connected pins have reverse functionality such that they may act as an analog-to-digital convertor (ADC) for a transmit DRA antenna, and as a digital-to-analog convertor (DAC) for a receive DRA antenna. Four DRA antenna elements may be removed or disconnected (for example, out of 512 elements, 508 may remain connected).

The system 100, which can be modified for transmit and receive, is capable of both signal generation and reception, such that transmission and reception may both be calibrated.

In addition, the present disclosure realizes greater control over the beam side lobes of the DRA antenna 104, the beam pointing of the DRA antenna 104, and the beam gain of the DRA antenna 104. This may be achieved by controlling the amplitude and phase excitations of each antenna elements so that they combined coherently and provide the optimum radiated beam shape.

Calibration can help ensure that the imbalance between elements is corrected. Relative adjustment can help make the beam better by putting down side-lobe levels and focusing the beam better. Further, it can help in monitoring gain on transmission and reception. If gain is found to be dropping over the mission, this may be an indication to compensate for it in the long term.

Furthermore, the present disclosure allows for greater control over the traffic power on the user links. Another use of the calibration sub-system is the ability to measure absolute equivalent isotropic radiated power (EIRP) at the transmit, and absolute receiver gain at the receive. This may be done by using the calibration data and mathematically deriving the absolute level change in transmit or receive. If, for example, the transmit power would decrease over the life of the spacecraft, a commanded compensation could be performed to help restore it.

It will also be apparent to those of skill in the art that it will be possible to track failures of individual radiating elements 110 of the DRA antenna 104, as individual radiating elements 110 may be selected for calibration.

The present disclosure allows for the monitoring of effective isotropic radiated power (EIRP) and the antenna gain of the DRA antenna 104. Such benefits assist in the integration of the DRA antenna into existing structures or systems, and with testing.

Specific benefits relating to the calibration algorithm include a reduction in the deviation error of the probes and DRA antenna elements.

The calibration algorithm is further insensitive to variations in the RF-path of the probes over ageing and temperature (i.e., differential methods). Generally, a DRA antenna has an RF path in each element. If this probe RF path moves over time, it can result in errors. Techniques disclosed herein avoid such errors by performing differential measurement. If the RF probe gain increases by 1 dB, the calibration algorithm will not have to change the calibration coefficient factor because it is performing a relative measurement. However, if a measurement of gain is required then the algorithm would be impacted because gain is absolute, and not relative.

Calibration may be performed typically in just a few seconds up to a minute for all reference frequencies covering the RF band.

Calibration can be performed without traffic but may also be tailored to be performed with traffic.

In an embodiment, the calibration error performance is typically better than 0.3 dB gain and 3° phase for 1σ deviation.

The calibration algorithm is hardware agnostic, allowing it to be implemented in a wide range of systems.

Further, there are three levels of fail-safes on the probes RF paths for failure tolerance immunity but result in an increase of calibration error (graceful degradation).

The calibrations can perform N frequencies measurements within the RF band to improve accuracy vs. frequency.

Normalisation of the coefficients is performed to maintain control of the DRA antenna gain.

The calibration algorithm is independent of DRA antenna geometry and the operating frequency band.

Tracking and compensation over the operating frequency band may be accomplished using several reference frequencies and interpolations.

The calibration algorithm may be able to be performed in saturation for transmit DRA antennas.

DRA antenna receiver gain as well as DRA antenna transmit (equivalent isotropic radiated power) EIRP level tracking over lifetime (e.g., within ±1.0 dB with accuracy improvement methods).

Moreover, the calibration algorithm can allow for robust calibration correction factor (CCF) validation before usage in the beamforming network (BFN). The coefficients may be validated in relation to the previous history of change, minimum/maximum value threshold, 1-sigma deviation as well as the determination of the overall signal quality (SNR) at the measure interval.

The calibration algorithm is also able to detect failed elements using various inputs for the decision with physical root cause (RF front end, beamformer chip, etc.). This may be accomplished by measuring the coefficient deviation, and raising a flag to indicate that a particular element has failed. Further, if an element is completely off in respect to an expected range of change and in few other attempts, it will be declared as permanently faulty.

The optimal number of probes depends on the signal dynamic range reduction targeted and on the antennas pattern.

Measurements from different probes may be fused together to obtain the desired signal quality regardless of the position of the radiating element in the antenna array.

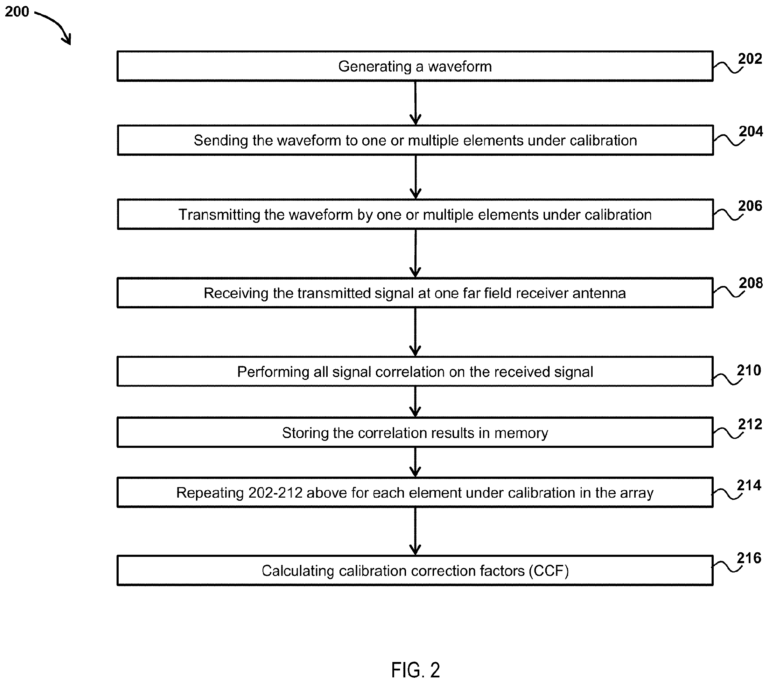

Referring now to Figure 2, shown therein is a method 200 of factory calibration of a node in a communication network, according to an embodiment.

The method 200 may be performed by or implemented using the system 100 of Figure 1.

Aspects of the method 200 may be performed at a processing unit. The processing unit may be located on a spacecraft on which the antenna being calibrated is disposed (e.g., a spacecraft on-board processor, a processing unit that is part of a DRA antenna, a processing unit separate from the OBP and DRA antenna, etc.). The processing unit may be an on-board processing unit (i.e., a processor configured for use on-board a satellite on which the DRA being calibrated is disposed).

The method 200 describes a factory calibration of a transmit DRA antenna, but those of skill in the art will reasonably appreciate that the process for a receive DRA antenna will be similar.

At 202, the method 200 includes generating a waveform.

At 204, the method 200 further includes sending the generated waveform to one or multiple elements under calibration.

In various embodiments, the generated waveform may also be provided to a comparison module.

At 206, the method 200 further includes transmitting the waveform by one or multiple elements under calibration.

The element under calibration may be an element in a DRA antenna which includes an array of radiating elements, such as the DRA antenna 104 of Figure 1.

At 208, the method 200 further includes receiving the transmitted signal at one far field receiver antenna.

In some embodiments, the transmitted signal is received at a single receiving device.

In some embodiments, the receiving device (e.g., the one far field receiver antenna) is a quasi-far-field (QFF) probe.

In some embodiments, the transmitted signal is received by a plurality of receiving devices.

In some embodiments, four receiving devices are arranged in a quadrature configuration about the element under calibration.

The use of four receiving devices arranged in a quadrature configuration about the transmitting device provides the advantage of robust redundancy along with graceful degradation on performance. A four-probe configuration may reduce the noise and interference effects. A four-probe configuration may reduce the physical deviation impairment with temperature and aging.

In various embodiments, the transmitted signal is provided to the comparison module.

In some embodiments, the method 200 includes digitizing and correlating the received waveform signal with the test waveform signal to obtain only the information that matters, for example, the phase and amplitude of the waveform signal.

At 210, the method 200 further includes performing all signal correlation on the received signal.

In some embodiments, the method 200 includes digitizing and correlating the received waveform signal with the test waveform signal to improve the signal-to-noise ratio (SNR). More specifically, a PRN code length and repetition may be used to increase the processing gain, which improves the final SNR.

In some embodiments, a pseudo-random-noise (PRN) code is used to mitigate the effects of noisy environments. The longer the code, the longer the correlation and the better the interference mitigation.

At 212, the method 200 further includes storing the correlation results in memory.

At 214, the method 200 further includes repeating 202-212 for each element in the array that is to be calibrated.

In some embodiments, repeating 202-212 for each element includes digitizing and correlating the received waveform with the generated test waveform to improve the signal-to-noise ratio (SNR).

In some cases, this includes code repetition for a single element to enhance the processing gain. This may be optional but can help achieve satisfactory performance.

At 216, the method 200 further includes calculating CCFs.

In some embodiments, the correlation results are used to calculate CCFs.

In some embodiments, the method 200 includes comparing, by the comparison module, the test waveform and the received waveform to compute CRF_{d} performed in factory calibration.

In some embodiments, the method 200 includes normalizing the CRF_{d} based on a certain criterion. Normalization of the CRFs ensures that once the CCFs are applied, there is no gain change. Similarly, the phase error may be normalized to be around 0 degrees.

In some embodiments, the method 200 includes validating the CRF_{d,} performed in factory calibration.

In some embodiments, the method 200 includes computing near field probe calibration reference factors (CRFₚ) by applying normalized CRF_{d} and making measurements at each near field probe, including measurements of the complex signal (e.g., amplitude and phase).

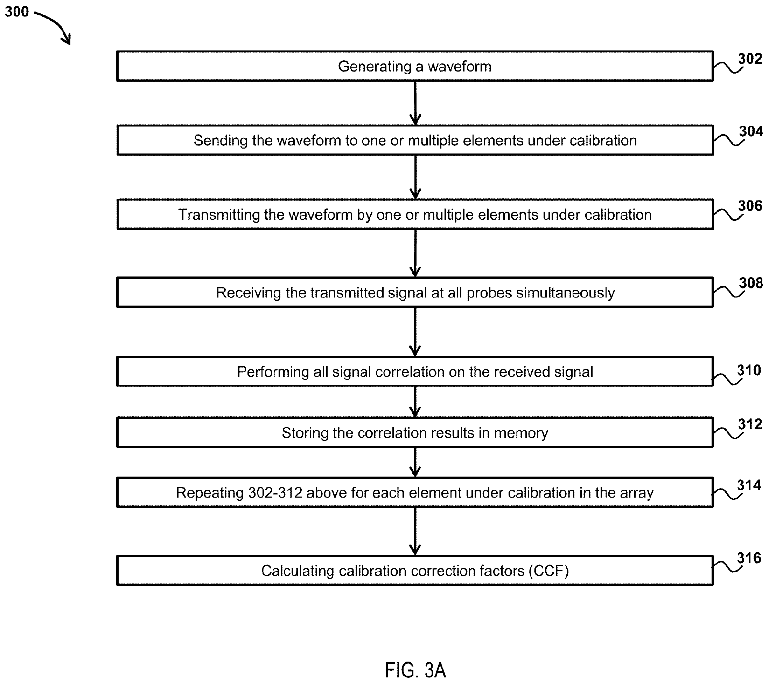

Referring now to Figure 3A, shown therein is a method 300 of transmit in-orbit calibration of a node in a communication network, according to an embodiment.

The method 300 may be performed by or implemented using the system 100 of Figure 1.

Aspects of the method 300 may be performed at a processing unit. The processing unit may be located on the spacecraft on which the antenna being calibrated is disposed (e.g., a spacecraft on-board processor, a processing unit that is part of a DRA antenna, a processing unit separate from the OBP and DRA antenna, etc.). The processing unit may be an on-board processing unit (i.e., a processor configured for use on-board a satellite on which the DRA being calibrated is disposed).

The method 300 describes an in-orbit calibration of a transmit DRA antenna, but those of skill in the art will reasonably appreciate that the process for a receive DRA antenna will be similar.

At 302, the method 300 includes generating, by a waveform generator, a waveform.

At 304, the waveform is provided to one or multiple elements under calibration.

At 306, the method 300 further includes transmitting, by one or multiple elements under calibration, the waveform.

In some embodiments, the transmitting element is part of a DRA antenna having a plurality of radiating elements.

In some embodiments, the waveform is transmitted through a plurality of elements of a transmitting device (e.g., a DRA antenna).

At 308, the method 300 further includes receiving simultaneously, by each receiving device of a plurality of receiving devices (e.g., probes), transmitted signal, and providing the received signal to a comparison module.

In some embodiments, four receiving devices are arranged in a quadrature configuration about the transmitting device.

The use of four receiving devices arranged in a quadrature configuration about the transmitting device provides the advantage of robust redundancy along with graceful degradation on performance. A four-probe configuration may reduce the noise and interference effects. A four-probe configuration may reduce the physical deviation impairment with temperature and aging.

At 310, the method 300 includes performing all signal correlation on the received signal.

In some embodiments, this includes digitizing and correlating the received signal with the waveform to obtain only the information that matters.

After the correlation is performed between the received waveform signal 130 and the test waveform 123, it is possible to estimate the relative amplitude and phase from the output of the correlator.

In some embodiments, the method 300 includes digitizing and correlating the received signal with the waveform to improve the signal-to-noise ratio (SNR).

In some embodiments, a long pseudo-random-noise (PRN) code is used to mitigate the effects of noisy environments.

In various embodiments, it is also possible to use a continuous waveform (e.g., CW or sinewave) which is a form of a PRN code but with no Peak to Average ratio and a small bandwidth.

At 312, the method 300 further includes storing the correlation results in memory.

At 314, the method 300 further includes repeating 302-312, along with the digitization and correlation of the received signal with the waveform to increase the SNR, if necessary.

In some embodiments, repeating 302-312 for each element includes digitizing and correlating the received waveform with the generated waveform to improve the SNR.

At 316, the method 300 further includes comparing, by the comparison module, the waveform and each received signal to compute CCFs.

In some embodiments, the correlation results are used to compute CCFs.

In some embodiments, the method 300 includes computing updated raw CCFs from the obtained measurements and references.

In some embodiments, the method 300 includes normalizing the CCFs based on a certain criterion.

In some embodiments, the method 300 includes validating the CCFs.

In some embodiments, the method 300 includes applying the updated normalized CCFs. It will be understood by those of skill in the art that applying the CCFs means to correct the deviations or errors of the phased array antenna elements.

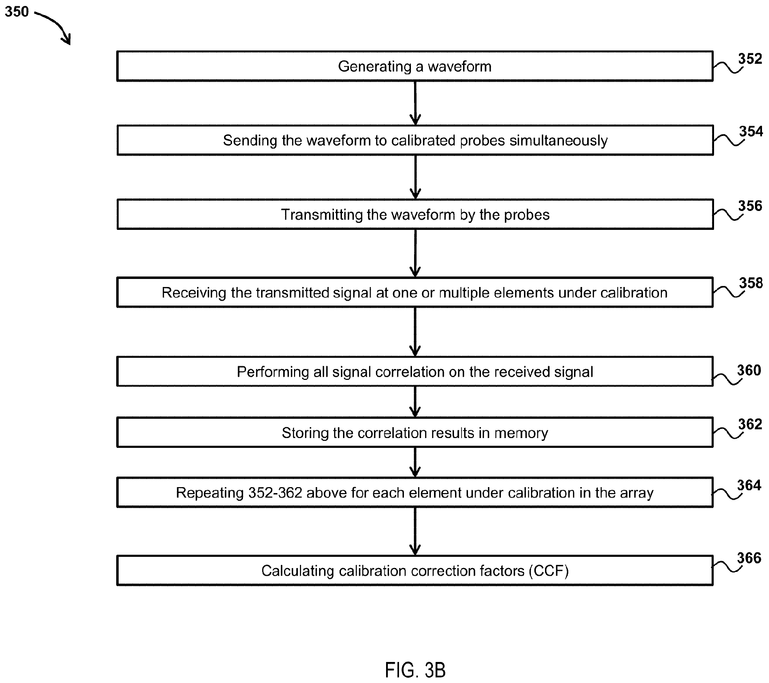

Referring now to Figure 3B, shown therein is a method 350 of receive in-orbit calibration of a node in a communication network, according to an embodiment.

At 352, the method 350 includes generating a waveform.

At 354, the method 350 includes sending the generated waveform to calibrated probes simultaneously.

At 356, the method 350 includes transmitting the waveform by the probes.

In some embodiments, the transmitting element is part of a DRA antenna having a plurality of radiating elements.

In some embodiments, the waveform is transmitted through a plurality of elements of a transmitting device (e.g., a DRA antenna).

At 358, the method 350 includes receiving the transmitted signal at one or multiple elements under calibration.

At 360, the method 350 includes performing all signal correlation on the received signal.

In some embodiments, this includes digitizing and correlating the received signal with the waveform to obtain only the information that matters.

After the correlation is performed between the received waveform signal and the waveform, it is possible to estimate the relative amplitude and phase from the output of the correlator.

In some embodiments, the method 350 includes digitizing and correlating the received signal with the waveform to improve the signal-to-noise ratio (SNR).

In some embodiments, a long PRN code is used to mitigate the effects of noisy environments.

In various embodiments, it is also possible to use a continuous waveform (e.g., CW or sinewave) which is a form of a PRN code but with no Peak to Average ratio and a small bandwidth.

At 362, the method 350 includes storing the correlation results in memory.

At 364, the method 350 includes repeating 352-362 for each element in the array that is to be calibrated.

In some embodiments, repeating 352-362 for each element includes digitizing and correlating the received waveform with the generated test waveform to improve the SNR.

At 366, the method 350 includes calculating CCFs.

In some embodiments, the correlation data is used to calculate CCFs.

In some embodiments, the method 350 includes computing updated raw CCFs from the obtained measurements and references.

In some embodiments, the method 350 includes normalizing the CCFs based on a certain criterion.

In some embodiments, the method 350 includes validating the CCFs

In some embodiments, the method 350 includes applying the updated normalized CCFs. It will be understood by those of skill in the art that applying the CCFs means to correct the deviations or errors of the phased array antenna elements.

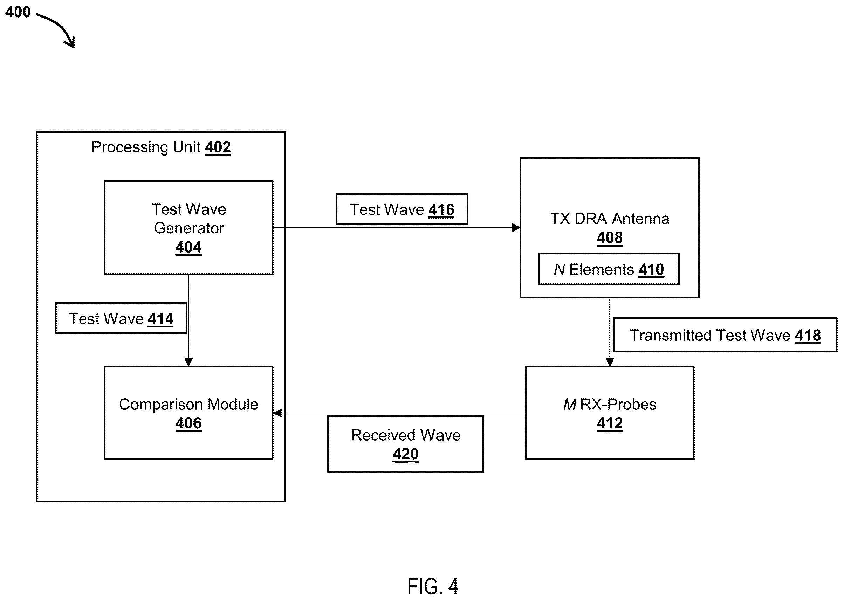

Referring now to Figure 4, shown therein is a block diagram of a calibration system 400 of a transmit DRA antenna, according to an embodiment.

As illustrated, the system 400 includes processing unit 402, a transmit DRA antenna 408, and one or more receive probes 412. In an embodiment, the processing unit 402 is an on-board processor.

The processing unit 402 includes a test wave generator 404 and a comparison module 406.

The test wave generator 404 generates a single test wave and provides test wave 416 to the transmit DRA antenna 408 and test wave 414 to the comparison module.

While the test waves are numerated differently for purposes of clarity in the illustration, it will be understood that test wave 414 and test wave 416 are the same test wave.

Test wave 416 is then transmitted by transmit DRA antenna 408 as transmitted test wave 418.

The transmission of the transmitted test wave 418 may be performed by one or more of the plurality of radiating elements 410 at the transmit DRA antenna 408, or by the transmit DRA antenna 408 as a whole. In this regard, a benefit of the present disclosure is that each radiating element 410, a particular radiating element 410, or the transmit DRA antenna 408 as a whole may be tested to determine its calibration. Similarly, this benefit may provide knowledge of any radiating elements 410 that are damaged or not operational, allowing for them to be bypassed, flagged for repair, or not used in a particular transmission.

The one or more receive probes 412 receive the transmitted test wave 418, and further provide it to the comparison module 406 as received wave 420.

In some embodiments, the number of receive probes 412 is four.

In some embodiments, the receive probes 412 are arranged in a quadrature configuration about the transmit DRA antenna 408.

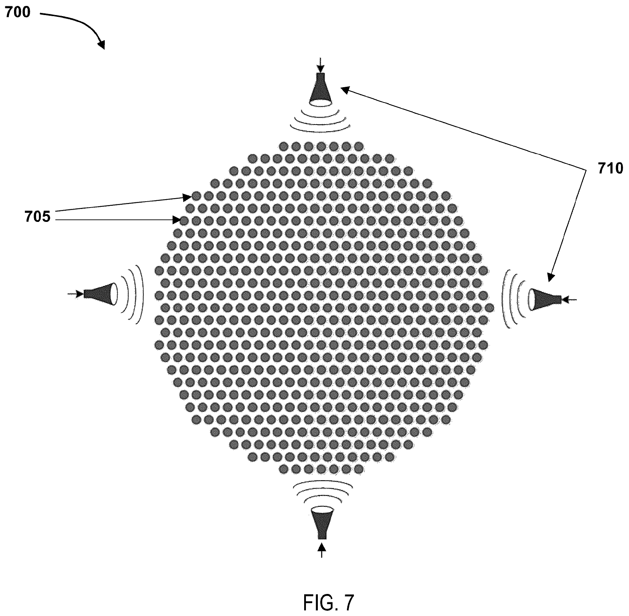

An example arrangement 700 of the system 400 is depicted in Figure 7, according to an embodiment. In Figure 7, four receive probes 710 are arranged in a quadrature arrangement about the transmit DRA antenna, which includes a plurality of radiating elements 705. It will be reasonably understood by a person of skill in the art that receive probes may be arranged in other arrangements about a transmit DRA antenna as well.

Referring again to Figure 4, the comparison module 406 compares the received wave 420 to the original test wave 414 received from the test wave generator 404.

In some embodiments, the comparison module 406 may further compute CCFs based on the comparison.

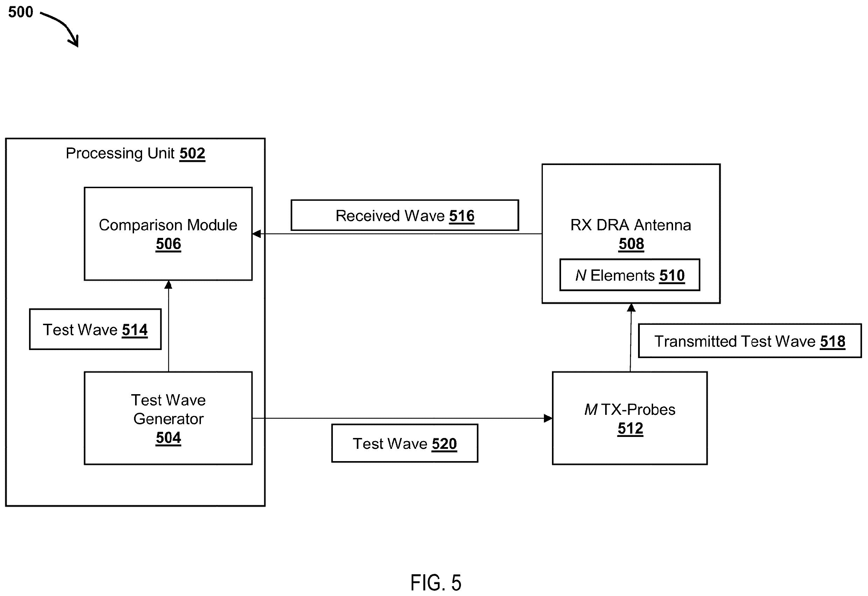

Referring now to Figure 5, shown therein is a block diagram of a calibration system 500 of a receive DRA antenna, according to an embodiment.

As depicted, the system 500 includes processing unit 502, a receive DRA antenna 508, and one or more transmit probes 512. In an embodiment, the processing unit 502 is an on-board processor. The processing unit 502 includes a test wave generator 504 and a comparison module 506.

The test wave generator 504 generates a single test wave and provides the test wave 514 to the comparison module 506 and test wave 520 the one or more transmit probes 512.

While the test waves are numerated differently for purposes of clarity in the illustration, it will be understood that test wave 514 and test wave 520 are the same test wave.

In some embodiments, the number of transmit probes 512 is one or more. Multiple probes 512 may be arranged as far apart as possible in a symmetric or even distribution about the DRA antenna 508. However, it should be noted that more important than the placement of the probes is the field of view of each probe with respect to all the elements. In some embodiments, four transmit probes 512 are arranged in a quadrature configuration about the receive DRA antenna 508.

It will be appreciated by those having skill in the art that a plurality of probes may be able to improve performance and increase redundancy.

The one or more transmit probes 512 then transmit a transmitted test wave 518.

The transmitted test wave 518 is received by the receive DRA antenna 508 as a received wave 516.

More specifically, the receiving of the transmitted test wave 518 may be performed by one or more of the plurality of receiving elements 510 at the receive DRA antenna 508, or by the receive DRA antenna 508 as a whole.

Thus, a benefit of the present disclosure is that each receiving element 510, a particular receiving element 510, or the receive DRA antenna 508 as a whole may be tested to determine its calibration.

Similarly, this benefit may provide knowledge of any receiving elements 510 that are damaged or not operational, allowing for them to be bypassed, flagged for repair, or not used in a particular reception.

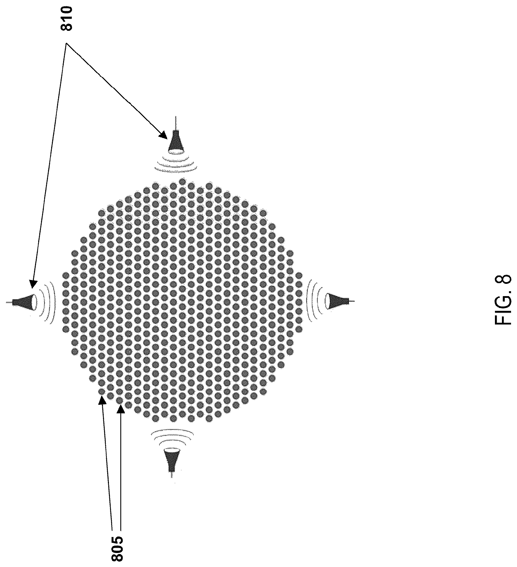

An example arrangement of the system 500 is depicted in Figure 8, according to an embodiment.

In Figure 8, four transmit probes 810 are arranged in a quadrature arrangement about the receive DRA antenna, which includes of a plurality of receiving elements 805. It will be reasonably understood by a person of skill in the art that transmit probes may be arranged in other arrangements about a receive DRA antenna as well.

The receive DRA antenna 508 then provides the received wave 516 to the comparison module 506 to compare the received wave 516 to the original test wave 514 provided by the test wave generator 504.

In some embodiments, the comparison module 506 may further compute CRFs based on the comparison.

In some embodiments, the comparison module 506 may further compute CCFs based on the comparison.

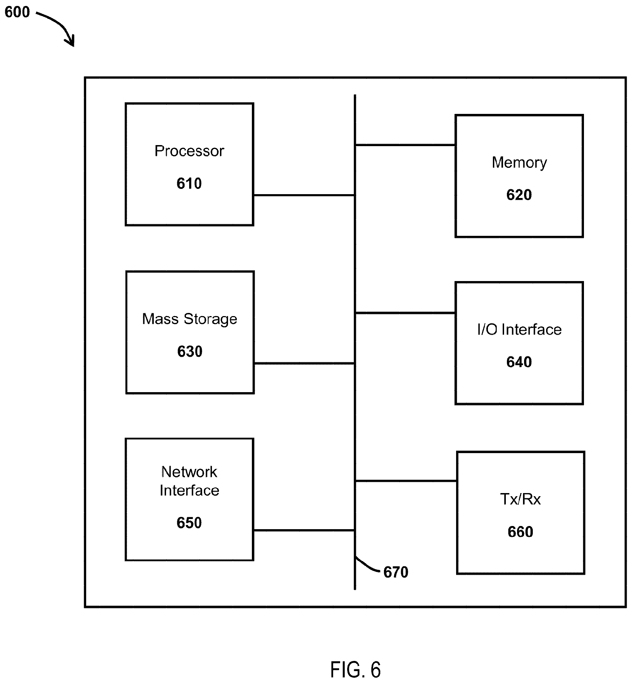

Referring now to Figure 6, shown therein is a block diagram of an electronic processing device 600, according to an embodiment. The electronic processing device 600 may be the processing unit 402 of Figure 4 or the processing unit 502 of Figure 5.

The processing device 600 may perform any or all of operations of the above methods and features explicitly or implicitly described herein, according to different embodiments of the present disclosure. For example, a computer equipped with network function may be configured as electronic device 600.

The device 600 may be any of the processing devices or processing units described above, such as, for example, processing unit 402 and processing 502.

As shown, the device 600 includes a processor 610, such as a Central Processing Unit (CPU) or specialized processors such as a Graphics Processing Unit (GPU) or other such processor unit, memory 620, non-transitory mass storage 630, I/O interface 640, network interface 650, and a transceiver 660, all of which are communicatively coupled via bi-directional bus 670. According to certain embodiments, any or all of the depicted elements may be utilized, or only a subset of the elements. Further, the device 600 may contain multiple instances of certain elements, such as multiple processors, memories, or transceivers. Also, elements of the hardware device may be directly coupled to other elements without the bi-directional bus. Additionally, or alternatively to a processor and memory, other electronics, such as integrated circuits, may be employed for performing the required logical operations.

The memory 620 may include any type of non-transitory memory such as static random access memory (SRAM), dynamic random access memory (DRAM), synchronous DRAM (SDRAM), read-only memory (ROM), any combination of such, or the like. The mass storage element 630 may include any type of non-transitory storage device, such as a solid state drive, hard disk drive, a magnetic disk drive, an optical disk drive, USB drive, or any computer program product configured to store data and machine executable program code. According to certain embodiments, the memory 620 or mass storage 630 may have recorded thereon statements and instructions executable by the processor 610 for performing any of the aforementioned method operations described above.

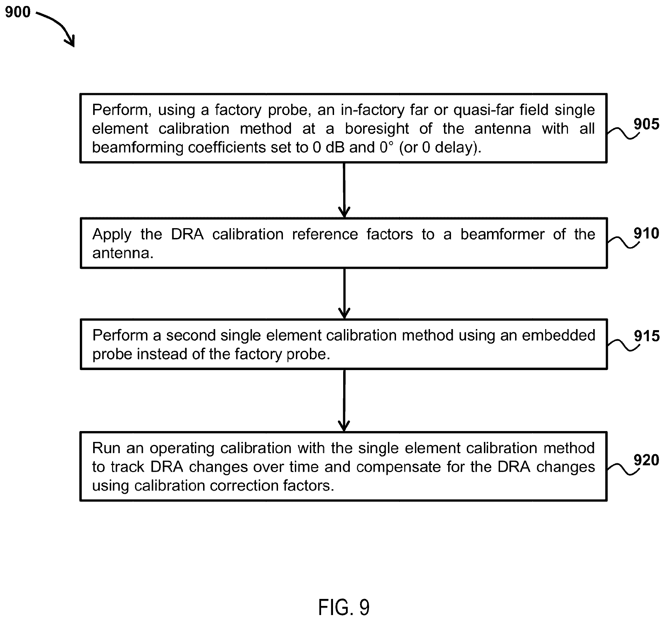

Referring now to Figure 9, shown therein is a method 900 of on-board calibration, according to an embodiment. The method 900 may be implemented using the system 200 of Figure 2. The method 900 may be encoded as computer-executable instructions which, when executed by a processor, cause the computer system to perform the method 900. In an embodiment, the method 900 may be the calibration algorithm 118 of Figure 1, or a portion thereof.

In various embodiments, the method 900 may be performed in-orbit or in-factory.

At 905, the method 900 includes performing, using a factory probe, an in-factory far field or quasi far field single element calibration method at a boresight of the antenna with all beamforming coefficients set to 0 dB and 0° (or 0 delay).

In various embodiments, single element calibration includes calibrating each element one after the other (i.e., one by one) while switching off the other elements.

In some embodiments, the performing includes computing and deriving CRF_{d}.

In other embodiments, other configurations such as using closer distances and different pointing may be used.

At 910, the method 900 further includes applying the CRF_{d} to a beamformer of the antenna.

In some embodiments, if the results show a slight deviation or if the system has poor RF isolation, the method 900 includes performing a second similar calibration to partly remove deviation.

At 915, the method 900 further includes performing a second single element calibration method using the on-board probe(s) instead of the factory probe. The second single element calibration method is the same method as the first, but includes calibrating the probes themselves in factory. In other words, it provides a reference plane for the signal received (CRFₚ).

In some embodiments, during the second calibration, not all elements are fired at same time. Further, the coupling and RF isolation issues found in DRA antennas are not too strong. As only one element is fired at a time, this results in better precision and removal of some of the unwanted RF effects.

In some embodiments, the performing includes computing and deriving probe CRFₚ.

At 920, the method 900 further includes running an operating calibration with the single element calibration method to track DRA antenna changes over time and compensate for the DRA antenna changes using CCFs.

In some embodiments, the running includes computing the CCFs to be applied to correct amplitude and phase errors using the process of computing and deriving the CRF_{d} and the process of computing and deriving the CRFₚ.

In some embodiments, the computing of the CCF includes a weighted complex sum of the number (n) of probes (e.g., 4) measurements post-processing.

This may reduce the CCFs sensitivity to physical deviations of the probes and the elements, provide noise reduction.

In some embodiments, the running includes performing code repetition K times to increase processing gain to work in a noisy environment.

In some embodiments, the CRF_{d} and CRFₚ are fixed during satellite operating life and the CCFs change over time tracking changes due to aging and temperature effects on DRA.

In some embodiments, a pre-calibration assessment may be performed prior to performing the method 900.

In some embodiments, a first calibration may be performed for calibrate the DRA antenna, without using probes.

In various embodiments, the first calibration includes characterizing the DRA antenna and finding the RF deviation, including in the radiating elements and everything in the path. Finding the deviation of the DRA antenna in far-field at a reference direction (boresight or nadir). This then becomes a first layer of compensation. This layer of compensation is applied, and an assumption is made that the DRA antenna is compensated for one direction.

In some embodiments, a second calibration may be performed to calibrate the calibration system itself.

In some embodiments, the second calibration includes assessing every probe reference signal to each element such that each probe receives from every element. This becomes the reference plane for probes to work with. This reference is stored in memory and is used to perform the calibration. Calculations are performed element by element for each probe. The reference plane is acquired and put into memory. Once this is done, let the DRA antenna run, and monitor for any changes at each probe. These changes include temperature changes, any imbalances, such as amplitude or phase imbalance. With two reference systems, it is possible to detect if even one element is imbalanced. This may be accomplished in a relative fashion.

A benefit of the above calibration techniques is that drift in amplitude or phase may be trackable, over the life of the hardware, even while it is deployed in space.

This advantage may be combined with either measurements on ground, or conducted remotely, to ensure that amplitude or phase are not drifting over the course of a mission.

In some embodiments, some of the dataset may be sent to a ground station for long term monitoring and trends. In situations where the calibration system is not working at all, it may be better to stop sending signal to the ground to mitigate damage, or to identify the elements that have failed. Another option may be to change the way a signal is sent.

If one or more elements have failed, it may be possible to compensate this with power at input. Similarly, in some embodiments a failed element may be ignored and compensated for.

In various embodiments, the method 900 is used for digital DRA antenna.

An advantage in dealing with a digital system is that if anything needs to be changed, it can be done so by uploading a new signal waveform. For example, if interference is detected, the reference waveform can be changed. Thus, calibration may be defined by software instead of hardware.

While the above description provides examples of one or more apparatus, methods, or systems, it will be appreciated that other apparatus, methods, or systems may be within the scope of the claims as interpreted by one of skill in the art. Elements of each embodiment may be incorporated into other embodiments, for example, configurations discussed in relation to one embodiment, may be applied to other embodiments disclosed herein. Further, it is evident that various modifications and combinations can be made without departing from the invention. The specification and drawings are, accordingly, to be regarded simply as an illustration of the invention as defined by the claims, and are contemplated to cover any and all modifications, variations, combinations or equivalents that fall within the scope of the present disclosure.

## Claims

1. A system for calibrating an antenna having a plurality of antenna elements, the system comprising:
at least one processing unit;
wherein the processing unit is configured to operate the antenna in a transmit calibration mode or a receive calibration mode, wherein in a transmit calibration mode the processing unit is configured to cause:
a test waveform generator to generate a first test waveform signal and provide the first test waveform signal to an antenna and a comparison module;
the antenna, to obtain the first test waveform signal from the test waveform generator and transmit the first test waveform signal;
a probe, about the antenna, to receive a first received waveform signal and provide the first received waveform signal to the comparison module; and
the comparison module to obtain the first received waveform signal from the probe and compare the first test waveform signal to the first received waveform signal to determine at least one calibration factor to be applied to the antenna;
and wherein in a receive calibration mode the processing unit is configured to cause:
the test waveform generator to generate a second test waveform signal and provide the second test waveform signal to the probe and the comparison module;
the probe to transmit the second test waveform signal;
the antenna to receive a second received waveform signal and provide the second received waveform signal to the comparison module;
the comparison module to compare the second received waveform signal to second test waveform signal to determine at least one calibration factor to be applied to the antenna.

2. The system of claim 1, wherein the antenna is a direct radiating array (DRA).

3. The system of claim 1, wherein transmitting the first test waveform signal comprises at least one of: transmitting by a single antenna element of the plurality of antenna elements at the antenna; and transmitting by a set of the plurality of antenna elements at the antenna; or
wherein receiving the second received waveform signal comprises at least one of: receiving by a single antenna element of the plurality of antenna elements at the antenna; and receiving by a set of the plurality of antenna elements at the antenna.

4. The system of claim 1, wherein the probe includes at least one of: a calibration antenna; a quasi-far-field (QFF) probe; and a near field (NF) probe.

5. The system of claim 1 further comprising a remediation module communicatively connected to the comparison module and the antenna, the remediation module configured to:
receive calibration data from the comparison module;
generate remediation data based on the calibration data; and
provide the remediation data to the antenna.

6. The system of claim 1, wherein the remediation data includes at least one of: control signals for controlling or adjusting operation of at least one element of the antennal; instructions for the antenna to bypass a particular element of the antenna; instructions for the antenna to disable a particular element of the antenna; and instructions for the antenna to reconfigure a particular element of the antenna.

7. The system of claim 1, wherein comparing includes at least one of:
comparing an amplitude of the first test waveform signal to an amplitude of the first received test waveform signal;
comparing a phase of the first test waveform signal to a phase of the first received test waveform signal;
comparing an amplitude of the second received waveform signal to an amplitude of the reference waveform signal;
comparing a phase of the second received waveform signal to a phase of the reference waveform signal.

8. The system of claim 1, further comprising one or more radio frequency (RF) amplifiers communicatively coupled to the antenna.

9. The system of claim 1, wherein the at least one calibration factor is defined by at least one of: a set of mission parameters; a reduction in side-lobe levels; or a power attribute.

10. The system of claim 1, wherein the at least one processing unit is further configured to cause a reporting module, at the antenna, to report the at least one calibration factor as information in a user interface to allow a user to visualize the system.

11. The system of claim 1, wherein the processing unit is located at an on-board processing unit of a satellite on which the DRA is or will be disposed; or
wherein the processing unit is located at a processor of the DRA; or
wherein the processing unit is located at a ground station.

12. A method, at a processing unit, of factory calibration of a node in a communication network, the method comprising:
generating, by a test waveform generator, a test waveform signal, and providing the test waveform signal to an antenna and a comparison module;
transmitting, by an element of the antenna, the test waveform signal;
receiving, by a probe, a received waveform signal, and providing the received waveform signal to the comparison module;
comparing, by the comparison module, the test waveform signal and the received waveform signal to compute calibration reference factors for the element.

13. The method of claim 12 further performing signal correlation on the received waveform signal.

14. The method of claim 12 further including storing correlation results in memory.

15. A method, at a processing unit, of in-orbit calibration of a node in a communication network, the method comprising:
generating, by a test waveform generator, a test waveform signal, and providing the test waveform signal to an antenna;
transmitting, by an element of the antenna, the test waveform signal;
receiving, by each probe of a plurality of probes, a received waveform signal, and providing each received waveform signals to a comparison module;
comparing, by the comparison module, the test waveform signal and each received waveform signal to compute calibration correction factors for the element.
